# EUROPÄISCHE PATENTSCHRIFT

(11) **EP 3 395 206 B1**
(45) Veröffentlichungstag und Bekanntmachung des Hinweises auf die Patenterteilung: **02.10.2019**
(21) Anmeldenummer: 18152505.6
(22) Anmeldetag: 19.01.2018
(51) Int. Cl.: A47C 27/22, B68G 7/02, B68G 11/00, C08J 9/00, C08J 9/33

(54) **VERFAHREN ZUM HERSTELLEN EINES SCHAUMFLOCKEN-FASER-VERBUNDPRODUKTES ALS RECYCLAT SOWIE POLSTERELEMENT ALS AUSGANGSPRODUKT ZUM DURCHFÜHREN DES VERFAHRENS**
METHOD FOR PRODUCING A FOAM FLAKE FIBRE COMPOSITE PRODUCT AS RECYCLED MATERIAL AND UPHOLSTERY ELEMENT AS INPUT PRODUCT FOR CARRYING OUT THE METHOD
PROCÉDÉ DE FABRICATION D'UN PRODUIT COMPOSITE À PARTIR DE FLOCONS DE MOUSSE ET DE FIBRES EN TANT QUE MATÉRIAU RECYCLÉ AINSI QU'ÉLÉMENT DE REMBOURRAGE EN TANT QUE PRODUIT DE DÉPART DESTINÉ À LA MISE EN OEUVRE DUDIT PROCÉDÉ

(30) Priorität: 29.04.2017 DE 202017002240 U
(43) Veröffentlichungstag der Anmeldung: 31.10.2018
(73) Patentinhaber: Recticel N.V., 1140 Brussels (BE)
(72) Erfinder: De Kesel, Jean-Pierre, 9230 Wetteren (BE)
(74) Vertreter: Haverkamp, Jens

(56) Entgegenhaltungen:
- AT-B- 410 799
- DE-A1-102007 001 315
- DE-A1-102014 012 571
- DE-B3-102006 005 369
- FR-A1- 3 013 354

## Beschreibung

Die Erfindung betrifft ein Verfahren zum Herstellen eines Schaumflocken-Faser-Verbundproduktes als Recyclat aus zumindest einem zu recycelnden Polsterelement, welches Polsterelement einen Schaumkern und eine textile Umhüllung aufweist. Desweiteren betrifft die Erfindung ein Polsterelement als Ausgangsprodukt zum Durchführen des vorgenannten Verfahrens, insbesondere eines Polstermöbels, welches Polsterelement einen Schaumkern und wenigstens eine textile Umhüllung aufweist.

Polsterungen, die einen Schaumkern und eine oder auch mehrere textile Umhüllungen aufweisen, werden in einer Vielzahl unterschiedlicher Anwendungen eingesetzt. Bei einem solchen Polsterelement kann es sich beispielsweise um eine Matratze als Polsterung eines Bettes, eine Sitzpolsterung oder letztendlich jedwede andere Polsterung, die einen Schaumkern und zumindest eine textile Umhüllung des Schaumkernes aufweist, handeln. Die Schaumkerne derartiger Polsterungen können als Polyurethanschaumkern oder als Schaumkern aus Latex ausgeführt sein. Bei einem Einsatz von Polyurethan als Schaumkernmaterial wird in vielen Fällen ein duroplastischer Polyurethanschaum eingesetzt. Es gibt auch Anwendungen, bei denen thermoplastische Polyurethanschaumkerne Verwendung finden. Bei der textilen Umhüllung etwa einer Matratze als Polsterelement handelt es sich um eine gewebte Hülle aus textilem Material, mit der der Schaumkern eingefasst ist. Zwischen dieser Hülle und dem Schaumkern ist in vielen Fällen eine Wattierung aus einem Vlies-Material angeordnet.

Die Menge an Polsterungen dieser Art, die jährlich das Ende ihrer Lebensdauer erreicht haben und entsorgt werden müssen oder aufgrund eines Wechsels entsorgt werden sollen, ist beträchtlich. Allein innerhalb der Europäischen Union sind zur Zeit jedes Jahr etwa 30 Millionen Schaumkernmatratzen zu entsorgen. Zur Entsorgung werden diese Polsterelemente typischerweise verbrannt oder Abfalldeponien zugeführt. Da zur Herstellung derartiger Matratzen in vielen Fällen duroplastische Schaumkerne verwendet werden, kann ein solcher Schaumkern nicht durch Schmelzen wiederaufbereitet werden. Aus US 2013/0206878 A1 sowie aus US 2013/0210311 A ist jeweils ein Recyclingverfahren bekannt, mit dem ein Polsterelement eines Polstermöbels zum Herstellen eines neuen Produktes recycelt wird. Dieses Recycling umfasst die an sich bekannten Schritte einer Zerkleinerung des Polstermöbels und eine Trennung der Zerkleinerungsteile in bezüglich ihres Materials unterschiedliche Abfallfraktionen. Getrennt werden bei diesem vorbekannten Verfahren die Materialien der Polsterung, und zwar der Schaumkern von seiner textilen Umhüllung. Das Material des Schaumkerns wird einer Wiederverwertung zugeführt. Zu diesem Zweck wird der Schaumkern zerkleinert, was ein Zerschneiden und Mahlen dieses Materials beinhaltet. Zum Herstellen eines Recyclingproduktes aus dem zerkleinerten Schaumkern werden die Schaumflocken mit gewissen Anteilen von Wiederaufbearbeitungsfraktionen anderer Materialien, wie etwa Fasern der Umhüllung, vermischt und es werden zusätzlich Bikomponentenfasern in die Materialmischung eingebracht. Die Bikomponentenfasern werden als Neumaterial aus einem Bikomponentenfaservorrat entnommen. Bei derartigen Bikomponentenfasern handelt es sich um Fasern mit einem thermoplastischen Mantel, der ausgelegt ist, bereits bei relativ geringen Temperaturen zu schmelzen, beispielsweise bei 110°C bis 120°C. Die Kernfaser weist einen deutlich höheren Schmelzpunkt auf. Diese, unter das zerkleinerte Recyclingmaterial gemischten Fasern dienen zum Verkleben der Materialmischung unter Wärmeeinfluss. Zum Herstellen eines Recyclates aus dieser Materialmischung wird dieses auf eine Unterlage in der gewünschten Dicke aufgebracht, über die Schmelztemperatur des Mantels der Bikomponentenfasern erwärmt und anschließend abgekühlt. Durch das Erweichen des bereits bei niedriger Temperatur schmelzenden Mantels der Bikomponentenfasern sind anschließend die zunächst nur lose aneinander anliegenden Partikel der Materialmischung miteinander verklebt. In einem nachfolgenden Schritt wird dieses Zwischenprodukt in seine gewünschte Form geschnitten.

Aus DE 10 2014 012 571 A1 ist ein Verfahren zum Herstellen eines Schichtkörpers, beispielsweise einer Matratze bekannt. Bei diesem Verfahren wird zur Realisierung eines hinreichenden Zusammenhaltes bzw. der erforderlichen Formstabilität das Ausgangsmaterial - Schaumstoffkörperchen und Fasern - mit einem Kleber vermischt und anschließend eine Verklebung der Komponenten vorgenommen. Als Kleber können thermoplastische Fasern verwendet werden. Dieses Verfahren ist aufwendig und nicht effizient.

Aus JP 2000-070564 A ist ein Verfahren zum Herstellen von gepolsterten Fahrzeugsitzen bekannt. Als Polsterung dienen Fasern, die durch thermoplastische Fasern zusammengehalten sind. Geformt werden die Fasern in die gewünschte Form des Sitzes in einem Formwerkzeug, bei welchem Vorgang die Fasern zugleich kompaktiert werden. Eingesetzt werden Bikomponentenfasern. Hingewiesen wird in diesem Stand der Technik, dass die Fasern recycelt werden können.

Auch wenn mit dem aus US 2013/0206878 A1 vorbekannten Verfahren insbesondere auch duroplastische Schaumkerne zum Herstellen eines neuen Produktes recycelt werden können, wäre es wünschenswert, wenn der Recyclingprozess nicht nur vereinfacht, sondern auch effizienter durchgeführt werden könnte.

Gelöst wird diese Aufgabe erfindungsgemäß durch ein Verfahren der eingangs genannten Art, bei dem bei der Herstellung des zu recycelnden Polsterelementes in den Schaumkern und/oder seine textile Umhüllung Schmelzfasern, die zumindest anteilig aus einem niedrig schmelzenden Kunststoff bestehen, in einer solchen Menge eingearbeitet werden, damit diese Menge beim Recyceln des Polsterelementes zum Herstellen eines Schaumflocken-Faser-Verbundproduktes als Recyclat zur Bereitstellung des benötigten Bindemittels ausreicht, und zum Herstellen des Schaumflocken-Faser-Verbundproduktes der Schaumkern des Polsterelementes zu Schaumflocken zerteilt und die textile Umhüllung zumindest in Teilen in Fasern zertrennt wird, bei dem anschließend das Schaumflocken-Faser-Zerkleinerungsgemisch in Form gelegt und zum Erschmelzen der darin enthaltenden Schmelzfasern als Bindemittel des Zerkleinerungsgemisches auf eine oberhalb der Schmelztemperatur der Schmelzfasern liegende Temperatur erwärmt wird.

Gelöst wird diese Aufgabe auch durch ein Polsterelement als Ausgangsprodukt zum Durchführen des vorbeschriebenen Verfahrens, welches sich dadurch auszeichnet, dass das Polsterelement in seinem Schaumkern und/oder seiner Umhüllung Fasern enthält, die zumindest anteilig aus einem niedrig schmelzenden Kunststoff als Schmelzfasern bestehen, wobei der Anteil dieser Fasern an dem Polsterelement in Bezug auf die Masse des Schaumkernanteils ausreicht, damit deren Menge bei einem Recyceln der Polsterung, was ein Zerkleinern des Schaumkerns in Schaumflocken sowie ein In-Fasern-Zertrennen der Umhüllung oder eines Teils derselben beinhaltet, um unter Wärmeeinfluss auf eine Temperatur, die oberhalb der Schmelztemperatur der Schmelzfasern liegt, durch Erschmelzen der Schmelzfasern das benötigte Bindemittel zum Verkleben der Bestandteile des Zerkleinerungsgemisches zum Erstellen eines Schaumstoff-Faser-Verbundproduktes als Recyclat bereitzustellen.

Bei diesem Verfahren - gleiches gilt auch für das erfindungsgemäße Polsterelement, bei dem es sich beispielsweise um eine Matratze, ein Polsterelement eines Sitzes, wie etwa eines Sessels oder eines Sofas, oder um ein anderes Polsterelement mit einem Schaumkern und wenigstens einer textilen Umhüllung handeln kann - wird bereits das Ausgangsprodukt des erstmals hergestellten Polsterelementes mit denjenigen Materialien in ausreichender Menge ausgerüstet, die für das Herstellen eines Recyclates als Schaumstoff-Faser-Verbundprodukt aus diesem Polsterelement benötigt werden. So wird bei diesem Polsterelement bereits das zum späteren Verbinden der aus dem Schaumkern zu Schaumflocken zerkleinerten Schaumkernpartikel, welchen Schaumflocken auch andere Materialbestandteile, wie beispielsweise textile Fasern, beigemengt sein können, benötigte Bindemittel eingearbeitet. Als Bindemittel verfügt dieses Polsterelement bereits bei seiner Erstausrüstung über Schmelzfasern. Bei diesen kann es sich um Einkomponenten-, Bikomponenten- oder auch Mehrkomponentenfasern handeln. Diese Fasern sind bei diesem Polsterelement typischerweise in der textilen Umhüllung enthalten. Dies bedeutet, dass diese Fasern zur Ausbildung der textilen Umhüllung eingesetzt sind. Durchaus möglich ist es auch, in den Schaumkern derartige Schmelzfasern zu integrieren. Insbesondere wenn es sich hierbei um Bikomponentenfasern handelt, können diese in dem Schaumkern zudem eine gewisse Stützfunktion übernehmen. Es ist durchaus möglich, dass dem oder einem Teil des Schmelzfaseranteils einer solchen Schmelzfaser bereits bei dem juvenilen Polsterelement Bindemittelzwecke zuteilwerden, beispielsweise wenn innerhalb einer Wattierungslage derartige Fasern vorhanden sind. Dann können die Bindemitteleigenschaften derartiger Fasern bereits zum Zusammenhalt einer solchen etwa aus einem Vlies gefertigten Wattierungslage genutzt werden. Da es sich bei den Schmelzfasern um ein thermoplastisches Material handelt, kann dieses mehrfach über seinen Schmelzpunkt unter Beibehaltung seiner Bindungseigenschaften erwärmt werden. Die in dem Polsterelement enthaltenen Schmelzfasern sind bezüglich ihres Schmelzanteils bei der Herstellung des Polsterelementes nicht so weit erwärmt worden, dass diese zerfließen, sondern ihre faserige Form beibehalten. Dieses gilt gleichermaßen für Einkomponentenfasern sowie für Mehrkomponentenfasern.

Die für die Herstellung des Recyclates - des Schaumflocken-Faser-Verbundproduktes - werden die Zerkleinerungsprodukte - Schaumflocken und Fasern - als Zerkleinerungsgemisch in Form gelegt, bevor das Zerkleinerungsgemisch zum Erschmelzen der darin enthaltenen Schmelzfasern als Bindemittel auf eine Temperatur oberhalb der Schmelztemperatur der Schmelzfasern erwärmt wird. Das In-Form-Legen umfasst verschiedene Möglichkeiten das Zerkleinerungsgemisch für den Schmelzverbindungsprozess vorzubereiten. Das Zerkleinerungsgemisch kann beispielsweise in eine Form geschüttet werden und somit eine Form ausfüllen. Möglich ist es auch, dass das zu erwärmende Zerkleinerungsgemisch auf eine Unterlage geschüttet wird, und zwar ohne dass es sich hierbei um eine seitliche Begrenzungen aufweisende Form handelt. Das In-Form-Legen des Schaumflocken-Faser-Zerkleinerungsgemisches kann diskontinuierlich erfolgen, wie beispielsweise das Einlegen des Zerkleinerungsgemisches in eine Werkzeugform oder das Aufbringen einer Zerkleinerungsgemischschicht auf eine Unterlage oder auch kontinuierlich, indem das Zerkleinerungsgemisch beispielsweise auf einen Förderer kontinuierlich aufgetragen wird, der das darauf transportierte Zerkleinerungsgemisch einem Durchlaufofen für den Schmelzverbindungsprozess zuführt. Im letzteren Fall können quasi Endlosbänder als Recyclat hergestellt werden. Es versteht sich, dass bei einem solchen Konzept als Ausgangsprodukte eine Vielzahl von zu recycelnden Polsterelementen der in Rede stehenden Art benötigt werden.

Bei einem Einsatz von Bikomponentenfasern können diese, der gewünschten Anwendung entsprechend, unterschiedlich ausgeführt sein. In einer Grundausgestaltung derartiger Bikomponentenfasern umfassen diese eine Kernfaser als Tragfaser aus einem Material mit höherem Schmelzpunkt und einem Mantel aus einem Kunststoffmaterial mit einem niedrigeren Schmelzpunkt, typischerweise einem Polymer. Der Schmelzmantel kann die Kernfaser konzentrisch umgeben. Durchaus möglich sind auch Ausgestaltungen, bei der der Schmelzmantel exzentrisch bezüglich der Kernfaser angeordnet ist. Auch eine Nebeneinanderanordnung von Schmelzanteil und Kern- bzw. Tragfaser sind möglich. Diese beiden Bestandteile können auch umfänglich in Segmente geteilt nebeneinander angeordnet sein. Bikomponentenfasern können auch als Hohlfasern ausgeführt sein. Vor diesem Hintergrund besteht die Möglichkeit bei einem Einsatz von solchen Bi- oder Mehrkomponentenfasern, diese an die vorgesehene Anwendung in dem Polsterelement, beispielsweise der Matratze anzupassen. Daher können, sollte die Umhüllung des Polsterelementes unterschiedliche Lagen umfassen, beispielsweise ein oder mehrere Polsterlagen sowie eine textile Hülle, in diesen unterschiedliche Bi- oder Mehrkompomentenfasern zum Einsatz kommen. Die Bi- oder Mehrkomponentenfasern können in der textilen Umhüllung als Filamentfasern oder auch zusammen mit anderen Fasern, die keine Schmelzfasern sind, versponnen sein.

Die Menge bzw. Masse der Schmelzfasern in dem Polsterelement ist so ausgelegt, dass bei einem Recyceln der Polsterung, was ein Zerkleinern des Schaumkerns und ein Zerkleinern bzw. Zerreißen der textilen Umhüllung beinhaltet, in der Schaumflocken und Fasern der textilen Umhüllung umfassenden Materialmischung ausreichend Schmelzfasern vorhanden sind, um die zunächst bezüglich ihrer Partikel nicht verbundene Materialmischung unter Wärmeeinfluss durch Erschmelzen der Schmelzfasern miteinander verkleben zu können. Nach dem Erkalten ist als Recyclat ein neues Schaumstoff-Faser-Verbundprodukt hergestellt. Wenn die Faserstruktur bei dem Erwärmen zum Herstellen des Recyclates beibehalten bleibt, kann das Recyclat in derselben Art und Weise bei Erreichen seines Gebrauchsendes nochmals recycelt werden. Da typischerweise ein solches Recyclat ebenfalls mit einer textilen Umhüllung ausgerüstet sein wird, kann diese, sollte der Anteil an Schmelzfasern im Schaumkern für das Recyclat der zweiten Generation nicht ausreichend sein, zusätzliche Schmelzfasern in Form von Einkomponenten-, Bikomponenten- oder Mehrkomponentenfasern enthalten.

Da bei diesem Polsterelement und vor allem beim Recyceln dieses Polsterelementes grundsätzlich kein zusätzliches Material, insbesondere kein zusätzliches Bindemittel benötigt wird, ist der Recyclingprozess entsprechend vereinfacht. Darüber hinaus ist es nicht unbedingt erforderlich, dass die einzelnen Bestandteile des Polsterelementes zu ihrer Zerkleinerung getrennt werden müssen, sodass, wenn dieses vorgenommen wird, auch der Zerkleinerungsprozess gegenüber der herkömmlich vorgesehenen Trennung einer Zerkleinerung unterschiedlicher Materialien vereinfacht ist. Dieses hat auch Einfluss auf die Auslegung der für das Recyceln eingesetzten Maschinen. Somit kann mit Blick auf den eingangs gewürdigten Stand der Technik auf die Bevorratung und eine Zufuhr von Bikomponentenfasern verzichtet werden. Wenn eine Zerkleinerung des Schaumkerns und der textilen Umhüllung mit anderen Maßnahmen vorgenommen werden soll, was durchaus möglich ist, dann wird der Schaumkern in einem ersten Schritt beim Recyceln des Polsterelementes von der Umhüllung getrennt. Wenn die Umhüllung zusätzliche Verschlusselemente, wie Reißverschlüsse, Knöpfe oder dergleichen aufweist, werden diese Bestandteile aus dem Material aussortiert. Besonders geeignet ist eine Umhüllung, die ohne zusätzliche Verschlusselemente, wie Reißverschlüsse, Knöpfe oder dergleichen der Schaumkern einfasst. Derartige Umhüllungen sind hinlänglich bekannt.

Diejenigen Fasern der textilen Umhüllung der Polsterung, bei denen es sich nicht um Schmelzfasern handelt, sei es Einkomponentenfasern oder Bikomponentenfasern, sind ebenfalls Bestandteil der Materialmischung. Diese Fasern sind in dem Schaumstoff-Faser-Verbundprodukt als Rezyklat als Füllfasern enthalten. Diese können in dem Schaumstoff-Faser-Verbundprodukt zu einer Isolations- und/oder Dämmfunktionalität beitragen, und zwar akustisch und/oder thermisch. Zudem können diese Fasern eine stabilisierende Funktion bezüglich der Schaumbestandteile einnehmen.

Wesentlich bei dem beschriebenen Konzept ist, dass das Polsterelement grundsätzlich als Ganzes und somit mit seinem Schaumkern und der wenigstens einen textilen Umhüllung für die Herstellung eines Recyclates verwendet wird. Abfälle entstehen grundsätzlich nicht, es sei denn, dass die textile Umhüllung Reißverschlüsse oder dergleichen aufweist, die zuvor zu entfernen sind. Damit ist ein solches Polsterelement, sei es eine Matratze, eine Sitzpolsterung oder ein anderes Polsterelement vollständig oder quasi vollständig recycelbar. In Abhängigkeit von dem aus einem solchen Polsterelement herzustellenden Recyclat können in die Materialmischung des erstmals hergestellten Polsterelementes zusätzliche Stoffe zum Erzielen bestimmter Eigenschaften des Recyclates - des Schaumstoff-Faser-Verbundproduktes - eingebracht werden. Hierbei kann es sich beispielsweise um flammenhemmende Fasern oder zusätzliche Füllstoffe handeln. In Abhängigkeit von der gewünschten Verwendung des Schaumstoff-Faser-Verbundproduktes können auch andere Materialien als weitere Komponenten verwendet werden.

In dem juvenilen Polsterelement beträgt der Gewichtsanteil an Schmelzfasern typischerweise 5 % oder mehr des Gewichtes des Schaumkerns. Bei dem Schaumkern selbst kann es sich um einen Schaumkern aus jedwedem Material handeln, der für die gewünschten Polsterungszwecke geeignet ist. Daher kann der Schaumkern aus einem Polyurethanschaum, insbesondere auch aus einem duroplastischen Polyurethanschaum oder auch aus Latex hergestellt sein. Daher kann der Schaumkern einer solchen Matratze auch aus unterschiedlichen Schaumlagen, die auch aus unterschiedlichen Schaummaterialien hergestellt sein können, bestehen. Der Gewichtsanteil der Schmelzfasern bezieht sich auf deren Gesamtgewicht und nicht lediglich auf das Gewicht eines Schmelzfasermantels, wenn es sich bei den Schmelzfasern um Bikomponenten- oder Mehrkomponentenschmelzfasern handelt. Das Polsterelement wird man typischerweise nur mit einem solchen Gewichtsanteil an Schmelzfasern ausrüsten, der ausreicht, die Zerkleinerungsprodukte zum Herstellen eines Recyclates miteinander zu verkleben. Dieses ist grundsätzlich bereits mit einem Schmelzfaseranteil von 5 % des Gewichtes des Schaumkernes möglich. Wenn die Recyclingpartikel des Polsterelementes mit mehr Bindemittel miteinander verbunden werden sollen, wird man den Gewichtsanteil der Schmelzfasern in Bezug auf das Gewicht des Schaumkernes entsprechend anheben, beispielsweise auf 10 bis 15%. Durchaus möglich sind auch höhere Gewichtsanteile an Schmelzfasern in der juvenilen Polsterung. Da Schmelzfasern typischerweise teurer sind als andere Fasern, die für eine solche textile Umhüllung verwendet werden, wird man den Schmelzfaseranteil in aller Regel auf das zum Herstellen eines definierten Recyclates notwendigen Anteils beschränken.

Die Schmelztemperatur der Schmelzfasern liegt unterhalb der Zersetzungstemperatur der aus dem Schaumkern zerkleinerten Schaumflocken. Dieses gewährleistet, dass bei dem notwendigen Erwärmungsprozess zum Verbinden der Zerkleinerungspartikel zur Herstellung des Recyclates sich die durch das Zerkleinern des Schaumkerns gebildeten Schaumflocken nicht zersetzen, sondern ihre ursprünglichen Eigenschaften beibehalten. Die Schmelztemperatur der Schmelzfasern liegt typischerweise zwischen 100°C und 120°C. Die Schmelzfasern bestehen typischerweise aus einem niedrig schmelzenden Polyesterpolymer. Handelt es sich bei den Schmelzfasern um Zweikomponentenfasern, besteht der Kern typischerweise aus PP, PET oder einem modifizierten PES.

Durchaus möglich ist der Einsatz von Schmelzfasern mit unterschiedlichen Schmelztemperaturen. Hierdurch kann ein bezüglich der Schmelztemperatur sich progressiv einstellendes Bindemittel bereitgestellt werden. Bei einer solchen Ausgestaltung weist eine Gruppe einen etwas höheren Schmelzpunkt und einer anderen Gruppe an Schmelzfasern einen etwas niedrigeren Schmelzpunkt auf. In der Gruppe der Schmelzfasern mit höherer Schmelztemperatur sind eines oder mehrere der folgenden Fasern einzeln oder in Kombination miteinander enthalten: Polyglykolsäure (PGA), Polymilchsäure (PLA), Polyethylenadipat (PEA), Polyhydroxyalkanoat (PHA), Polyethylenterephthalat (PBT), Polytrimethylenterephthalat (PET) sowie Polyethylennaphthalat (PEN) und wobei die zweite Gruppe der Schmelzfasern mit niedrigerer Schmelztemperatur polyesterbasierte Fasern mit einem entsprechend geringerem Schmelzpunkt sind. Bevorzugt werden als Schmelzfasern jedoch Bikomponentenfasern, insbesondere solche mit einer Kernfaser und einem Schmelzmantel eingesetzt, bei der der Schmelzpunkt der Kernfaser etwa der doppelten Temperatur der Schmelztemperatur des Mantelmaterials entspricht.

Bei der Verwendung von Einkomponentenfasern als Schmelzfasern ist bei dem Erwärmungsprozess darauf zu achten, dass die Faser nicht vollständig aufschmilzt bzw. ein nennenswerter Anteil der Schmelzfasern nicht vollständig aufgeschmolzen wird. Schmelzen die Fasern vollständig im Zuge des Erwärmungsprozesses zum Herstellen des Recyclates auf, bilden sich Bindemitteltropfen, die sich in dem Recyclat dann wohlmöglich als härtere Bereiche identifizieren lassen.

Vorzugsweise wird der Schaumkern des Polsterelementes durch Schreddern und/oder Mahlen zerkleinert, um Schaumflocken in einer Größe zwischen 3 mm und 50 mm, insbesondere zwischen 10 mm und 25 mm zu erstellen. Die Schmelzfasern weisen in dem Recyclat eine Länge zwischen 6 mm und 70 mm, insbesondere zwischen 30 mm und 40 mm auf. In jedem Fall ist die durchschnittliche Länge der Schmelzfasern größer als der durchschnittliche Durchmesser der Schmelzflocken. Die durchschnittliche Länge der Schmelzfasern sollte zumindest 30% bis 50% größer sein als der durchschnittliche Durchmesser der Schaumflocken.

Das aus einem solchen Polsterelement hergestellte Recyclat kann beispielsweise eine Matratze oder ein anderes Polsterelement sein. Ebenfalls sind technische Anwendungen, wie beispielsweise die Herstellung von akustischem Dämmmaterial aus einem solchen Polsterelement als Recyclat möglich, und zwar als akustisches Dämmmaterial und/oder auch als Wärmedämmmaterial.

Nachfolgend ist die Erfindung anhand eines Ausführungsbeispiels unter Bezugnahme auf die beigefügten Figuren beschrieben. Es zeigen:

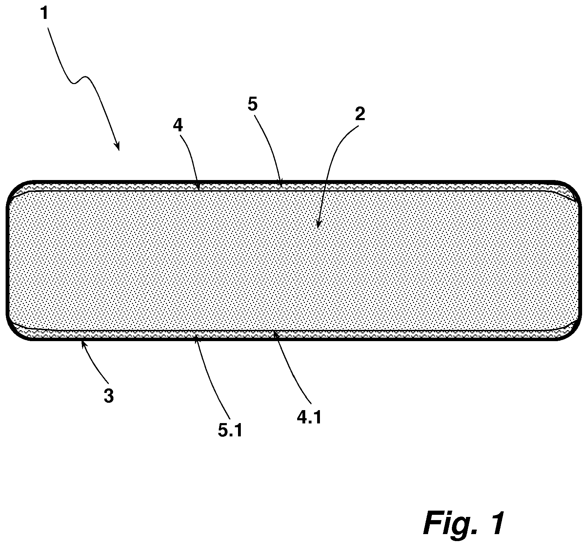

- **Fig. 1:**: einen schematisierten Querschnitt durch eine Matratze als Polsterelement,
- **Fig. 2:**: ein Flussdiagramm zum Aufzeigen der Schritte, die bei einem Recycling der Matratze der Figur 1 zum Herstellen eines neuen Schaumstoff-Faser-Verbundproduktes vorgenommen werden und
- **Fig. 3:**: ein Flussdiagramm zum Aufzeigen der Schritte, die bei einem Recycling der Matratze der Figur 1 zum Herstellen eines neuen Schaumstoff-Faser-Verbundproduktes gemäß einem alternativen Recyclingverfahren vorgenommen werden.

Eine Matratze 1 als Polsterelement umfasst einen Schaumkern 2. Bei dem dargestellten Ausführungsbeispiel besteht der Schaumkern 2 aus einem duroplastischen Polyurethan. Der Schaumkern 2 ist von einer textilen, gewebten Hülle 3, bei dem dargestellten Ausführungsbeispiel aus Baumwolle gefertigt, umgeben. Die Hülle 3 fasst den Schaumkern 2 an allen Seiten und somit auch an den aufgrund der Schnittdarstellung nicht gezeigten Stirnseiten ein. Zwischen den beiden Flachseiten 4, 4.1 des Schaumkernes 2 und der Hülle 3 ist jeweils eine Wattierung 5, 5.1 vorgesehen. Bei der Wattierung 5, 5.1 handelt es sich jeweils um eine Vlieslage. Dies erhöht nicht nur den Liegekomfort, sondern ermöglicht auch ein einfaches Aufziehen der Hülle 3. Die Wattierung 5, 5.1 besteht aus Polyesterfasern.

In die textile Umhüllung, bestehend bei dem dargestellten Ausführungsbeispiel aus der Hülle 3 und der Wattierung 5, 5.1, sind Schmelzfasern eingearbeitet, die bei dem dargestellten Ausführungsbeispiel Bikomponentenfasern sind. Die in der Hülle 3 und den Wattierungen 5, 5.1 verarbeitete Menge an Schmelzfasern beträgt 7% des Gewichtes des Schaumkerns 2. Bei den Bikomponenten-Schmelzfasern handelt es sich um solche mit einer Kernfaser mit einer Schmelztemperatur von über 200°C. Der die Kernfaser umgebende Schmelzmantel weist eine Schmelztemperatur von etwa 110°C auf.

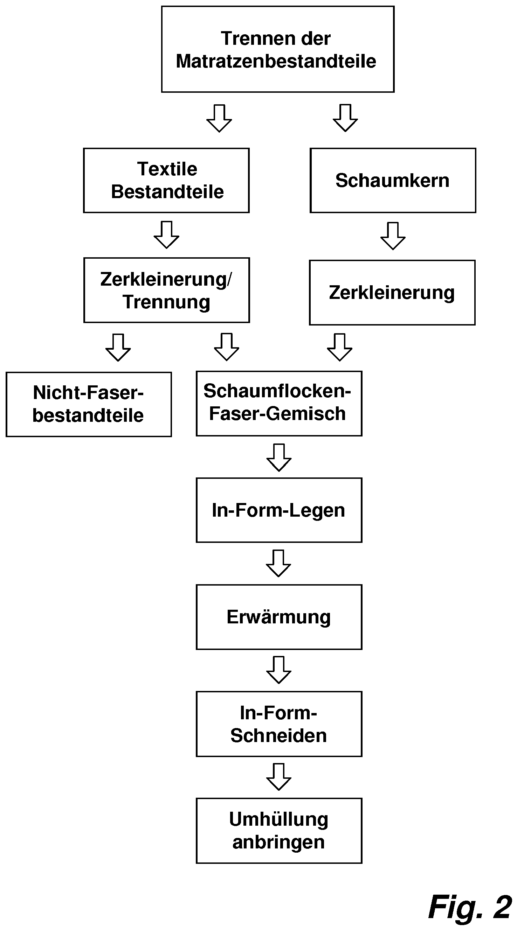

Wenn die Matratze 1 ihre vorgesehene Lebensdauer erreicht hat oder diese seitens eines Benutzers nicht mehr verwendet werden soll, kann diese ohne Zusatz weiterer Bestandteile zu einem neuen Schaumstoff-Faser-Verbundprodukt recycelt werden. Das Recyclingverfahren ist nachstehend anhand des Flussdiagramms der Figur 2 erläutert.

In einem ersten Schritt wird die textile Umhüllung - die Hülle 3 sowie die Wattierungen 5, 5.1 - von dem Schaumkern 2 getrennt. Dieses erfolgt vor dem Hintergrund, dass eine Zerkleinerung des Schaumkerns 2 auf andere Weise erfolgt als eine Zerkleinerung der textilen Bestandteile. Die Zerkleinerung der textilen Bestandteile erfolgt durch ein Zerreißen, um als Zerkleinerungsmaterial Fasern zu erhalten. Die durch die Zerkleinerung erhaltenden Schmelzfasern weisen typischerweise eine Länge zwischen 6 und 70 mm auf. Die Länge der Schmelzfasern kann in Abhängigkeit von der Größe der durch Zerkleinern des Schaumkerns erzeugten Schaumflocken vorgesehenen Größe angepasst sein. Vorzugsweise beträgt die Länge der Schmelzfasern nach der Zerkleinerung etwa das 2- bis 3-fache des durchschnittlichen Durchmessers der Schaumflocken. In der Hülle 3 enthaltene Verschlussmittel, wie beispielsweise ein Kunststoff-Reißverschluss wird aus dem Fasermaterial entfernt. Hierbei handelt es sich somit um einen Nicht-Faserbestandteil. Der Schaumkern 2 wird zu Schaumflocken zerkleinert. Dieses kann in einem ersten Schritt ein Zerschneiden des Schaumkerns 2 in kleinere Schaumkernteile und ein anschließendes Mahlen derselben zu Schaumflocken beinhalten. Die auf diese Weise bereitgestellten Schaumflocken weisen eine Größe zwischen 15 mm und 20 mm auf. Bei dieser Schaumflockengröße liegt die Länge der Schmelzfasern vorzugsweise zwischen 30 mm und 40 mm.

Die Zerkleinerungsprodukte aus der Zerkleinerung des textilen Materials 3, 5, 5.1 sowie des Schaumkerns 2 werden anschließend zu einem Schaumflocken-Faser-Gemisch verarbeitet. In diesem Gemisch sind die Schaumflocken und die Fasern möglichst homogen verteilt. Der Faserbestandteil umfasst die Bikomponentenfasern mit ihrem Schmelzmantel ebenso wie die Fasern aus anderem Material. Die in diesem Schaumflocken-Faser-Gemisch enthaltenen Bikomponentenfasern dienen mit ihrem Schmelzmantel zum Verbinden der einzelnen Partikel des Gemisches. Um dieses lose Partikelgemisch miteinander zu einem neuen Schaumstoff-Faser-Verbundprodukt zu formen, wird in einem ersten Schritt das Schaumflocken-Faser-Gemisch in eine oder in mehrere Formen gelegt, was abhängig von der Größe und/oder der Form des zu erstellenden Schaumstoff-Faser-Verbundproduktes abhängig ist. Beispielsweise kann das Schaumflocken-Faser-Gemisch auf eine ebene Unterlage mit einer gewissen Dicke zum Ausbilden einer Schaumflocken-Faser-Gemisch-Schicht geschüttet bzw. gelegt werden. Nach einem solchen In-Form-Legen des Schaumflocken-Faser-Gemisches wird dieses erwärmt, und zwar bis über die Schmelztemperatur des Schmelzmantels der Bikomponentenfasern. Im Zuge der Erwärmung wird der Schmelzmantel angeschmolzen mit dem Ergebnis, dass die daran angrenzenden Partikel bei einem anschließenden Erkalten mit der Bikomponentenfaser verbunden sind. Dieser Prozess kann kontinuierlich durchgeführt werden. Aufgrund der homogenen Verteilung der Bikomponentenfasern in dem Schaumflocken-Faser-Gemisch und dem vorbeschriebenen Massenanteil an Bikomponentenfasern in der textilen Umhüllung der Matratze 1 ist ein hinreichender Faseranteil in diesem Gemisch ein solcher aus Bikomponentenfasern, um sämtliche Partikel miteinander verkleben bzw. verbacken zu können. Bei dem dargestellten Ausführungsbeispiel wird das In-Form-gelegte Schaumflocken-Faser-Gemisch auf eine Temperatur von etwa 115°C erwärmt, beispielsweise in einem Mikrowellendurchlaufofen. Die Dauer der Erwärmung wird so eingestellt, dass nicht der gesamte Schmelzmantel der Bikomponentenfasern aufschmilzt.

Nach Erkalten des wärmebehandelten Schaumflocken-Faser-Gemisches und entsprechendem Aushärten der erschmolzenen Schmelzfasern ist ein neues Schaumstoff-Faser-Verbundprodukt, zunächst als Halbzeug, bereitgestellt. Dieses wird anschließend bei dem dargestellten Ausführungsbeispiel in Form geschnitten, und zwar in eine solche Form, die der vorgesehenen Anwendung entspricht. In einem nachgeschalteten Schritt kann um das oder die auf diese Weise erstellten Schaumstoff-Faser-Verbundprodukte jeweils eine Umhüllung angebracht werden.

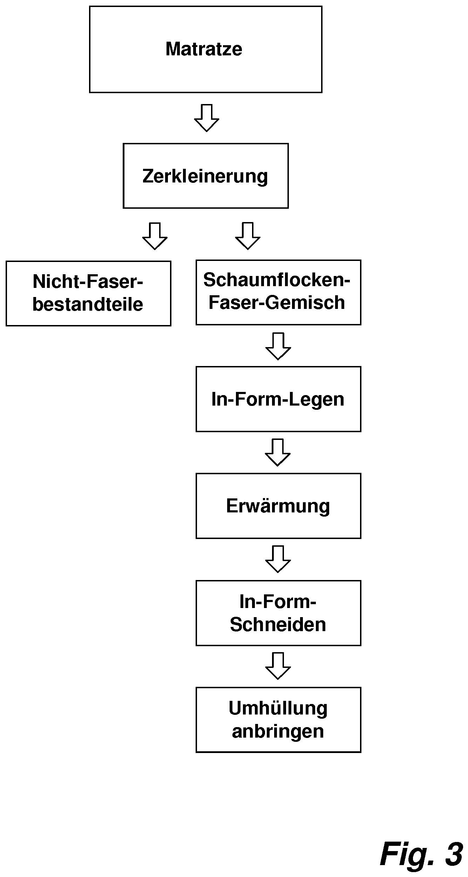

Figur 3 zeigt ein alternatives Verfahren zum Recyceln einer Matratze. Die bei diesem Recyclingverfahren vorgenommen Schritte entsprechen grundsätzlich denjenigen, wie dieses bereits zu dem Recyclingverfahren mit der Prozessschrittfolge der Figur 2 beschrieben ist, mit Ausnahme des Unterschiedes, dass die zu recycelnde Matratze in einem ersten Schritt nicht bezüglich ihrer Matratzenbestandteile getrennt wird. Die Matratze wird bei diesem alternativen Zerkleinerungsverfahren insgesamt durch Schreddern zerkleinert. Durch Schreddern wird der Schaumkern in Schaumkernflocken zerteilt. Zugleich werden die textilen Bestandteile zerrissen, um die gewünschten Fasern zu erhalten. Ein Mahlen ist bei dieser Verfahrensausgestaltung nicht vorgesehen, kann jedoch der Schredderzerkleinerung durchaus nachgeschaltet sein. Hartbestandteile der Matratze, wie beispielsweise Reißverschlüsse oder dergleichen werden aus dem zerkleinerten Materialgemisch entfernt, wenn diese in dem Schaumstoff-Faser-Verbundprodukt nicht enthalten sein sollen.

Das Besondere bei beiden vorbeschriebenen Verfahren ist, dass für die Herstellung des Schaumstoff-Faser-Verbundproduktes als Recyclat mit Ausnahme des zu recycelnden Ausgangsproduktes - hier: einer Matratze - kein zusätzliches Material benötigt wird. Es versteht sich, dass für die Zwecke des Herstellens eines recycelten Schaumstoff-Faser-Verbundproduktes auch mehrere, auch bezüglich Ihres Schaumkerns unterschiedliche Ausgangsprodukte verwendet werden können.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, die Erfindung umsetzen zu können.

### Bezugszeichenliste

- 1: Polsterelement/Matratze
- 2: Schaumkern
- 3: Hülle
- 4,4.1: Flachseite
- 5,5.1: Wattierung

## Patentansprüche

1. Verfahren zum Herstellen eines Schaumflocken-Faser-Verbundproduktes als Recyclat aus zumindest einem zu recycelnden Polsterelement (1), welches Polsterelement (1) einen Schaumkern (2) und eine textile Umhüllung (3, 5, 5.1) aufweist, **dadurch gekennzeichnet, dass** bei der Herstellung des zu recycelnden Polsterelementes (1) in den Schaumkern (2) und/oder seine textile Umhüllung (3, 5, 5.1) Schmelzfasern, die zumindest anteilig aus einem niedrig schmelzenden Kunststoff bestehen, in einer solchen Menge eingearbeitet werden, damit diese Menge beim Recyceln des Polsterelementes (1) zum Herstellen eines Schaumflocken-Faser-Verbundproduktes als Recyclat zur Bereitstellung des benötigten Bindemittels ausreicht, und zum Herstellen des Schaumflocken-Faser-Verbundproduktes der Schaumkern (2) des Polsterelementes (1) zu Schaumflocken zerteilt und die textile Umhüllung (3, 5, 5.1) zumindest in Teilen in Fasern zertrennt wird, dass anschließend das Schaumflocken-Faser-Zerkleinerungsgemisch in Form gelegt und zum Erschmelzen der darin enthaltenden Schmelzfasern als Bindemittel des Zerkleinerungsgemisches auf eine oberhalb der Schmelztemperatur der Schmelzfasern liegende Temperatur erwärmt wird.

2. Verfahren nach Anspruch 1, **dadurch gekennzeichnet, dass** die textile Umhüllung (3, 5, 5.1) des zu recycelnden Polsterelementes (1) Schmelzfasern enthält und der Prozess des In-Fasern-Zertrennens ausgeführt wird, damit die Länge der Schmelzfasern größer als der Durchmessermedian der durch Zerkleinern des Schaumkerns (2) hergestellten Schaumflocken ist.

3. Verfahren nach Anspruch 1 oder 2, **dadurch gekennzeichnet, dass** das In-Form-Legen des Zerkleinerungsgemisches als Einbringen desselben in eine Form oder als Auslegen desselben in Form einer Schaumflocken-Faser-Gemisch-Schicht durchgeführt wird.

4. Verfahren nach einem der Ansprüche 1 bis 3, **dadurch gekennzeichnet, dass** die Erwärmung des In-Form-gelegten Zerkleinerungsgeschmisches in einem Mikrowellendurchlaufofen durchgeführt wird.

5. Verfahren nach einem der Ansprüche 1 bis 4, **dadurch gekennzeichnet, dass** nach Aushärten der erschmolzenen Schmelzfasern das Schaumstoff-Faser-Verbundprodukt-Halbzeug in Form geschnitten wird.

6. Polsterelement, insbesondere eines Polstermöbels, welches Polsterelement (1) einen Schaumkern (2) und wenigstens eine textile Umhüllung (3, 5, 5.1) als Ausgangsprodukt zum Durchführen des Verfahrens nach einem der Ansprüche 1 bis 5 aufweist, **dadurch gekennzeichnet, dass** das Polsterelement (1) in seinem Schaumkern (2) und/oder seiner Umhüllung (3, 5, 5.1) Fasern enthält, die zumindest anteilig aus einem niedrig schmelzenden Kunststoff als Schmelzfasern bestehen, wobei der Anteil dieser Fasern an dem Polsterelement (1) in Bezug auf die Masse des Schaumkernanteils (2) ausreicht, damit deren Menge bei einem Recyceln des Polsterelementes (1), was ein Zerkleinern des Schaumkerns (2) in Schaumflocken sowie ein In-Fasern-Zertrennen der Umhüllung (3, 5, 5.1) oder eines Teils derselben beinhaltet, ausreicht, um unter Wärmeeinfluss auf eine Temperatur, die oberhalb der Schmelztemperatur der Schmelzfasern liegt, durch Erschmelzen der Schmelzfasern das benötigte Bindemittel zum Verkleben der Bestandteile des Zerkleinerungsgemisches zum Erstellen eines Schaumstoff-Faser-Verbundproduktes als Recyclat bereitzustellen.

7. Polsterelement nach Anspruch 6, **dadurch gekennzeichnet, dass** der Gewichtsanteil an Schmelzfasern zumindest 5% des Gewichtes des Schaumkerns (2) entspricht.

8. Polsterelement nach Anspruch 6 oder 7, **dadurch gekennzeichnet, dass** das Polsterelement in seinem Schaumkern und/oder seiner Umhüllung Fasern enthält, wobei der Anteil dieser Fasern in dem Polsterelement bezüglich seines Schaumkernanteils ausreicht, um die benötigte Menge an zusätzlichen Fasern für das aus dem recycelten Polsterelement erstellte Schaumprodukt bereitzustellen.

9. Polsterelement nach einem der Ansprüche 6 bis 8, **dadurch gekennzeichnet, dass** die Umhüllung des Schaumkerns (2) eine innere Vlieslage als Wattierung (5, 5.1) und eine äußere textile, insbesondere gewebte Hülle (3) umfasst und dass die Schmelzfasern in der Vlieslage und/oder der Hülle enthalten sind.

10. Polsterelement nach Anspruch 9, **dadurch gekennzeichnet, dass** die in der Vlieslage (5, 5.1) enthaltenen Schmelzfasern zum Verkleben der Fasern der Vlieslage dienen.

11. Polsterelement nach einem der Ansprüche 6 bis 10, **dadurch gekennzeichnet, dass** die Schmelzfasern zumindest anteilig als Bikomponentenfasern mit einem Kern und einem Schmelzfasermantel gefertigt sind, wobei der Kern aus einem Material mit einer höheren Schmelztemperatur als der Schmelzfasermantel besteht.

12. Polsterelement nach Anspruch 11, **dadurch gekennzeichnet, dass** der Kern der Bikomponentenfasern eine Faser aus PP, PET, modifiziertem PES und der Schmelzmantel ein niedrig schmelzendes Polyesterpolymer ist.

13. Polsterelement nach einem der Ansprüche 6 bis 12, **dadurch gekennzeichnet, dass** Schmelzfasern mit unterschiedlichen Schmelztemperaturen im Schaumkern und/oder der Umhüllung vorhanden sind.

14. Polsterelement nach Anspruch 13, **dadurch gekennzeichnet, dass** die Schmelzfasern in eine erste Gruppe an Schmelzfasern mit einer höheren Schmelztemperatur und in eine zweite Gruppe an Schmelzfasern mit einer geringeren Schmelztemperatur einteilbar sind, wobei in der Gruppe der Schmelzfasern mit höherer Schmelztemperatur eines oder mehrere der folgenden Fasern einzeln oder in Kombination miteinander enthalten sind: Polyglykolsäure (PGA), Polymilchsäure (PLA), Polyethylenadipat (PEA), Polyhydroxyalkanoat (PHA), Polyethylenterephthalat (PBT), Polytrimethylenterephthalat (PET) sowie Polyethylennaphthalat (PEN) und wobei die zweite Gruppe der Schmelzfasern mit niedrigerer Schmelztemperatur polyesterbasierte Fasern mit einem entsprechend geringerem Schmelzpunkt sind.

15. Polsterelement nach einem der Ansprüche 6 bis 14, **dadurch gekennzeichnet, dass** das Polsterelement eine Matratze ist.

## Claims

1. Method for producing a foam flake fibre composite product as recycled material from at least one upholstery element (1) which is to be recycled, said upholstery element (1) comprising a foam core (2) and a textile envelope (3, 5, 5.1), **characterised in that**, during the production of the upholstery element (1) which is to be recycled, melt fibres are worked into the foam core (2) and/or its textile envelope (3, 5, 5.1) which consist at least proportionately of a low-melting plastic, in such a quantity that this quantity is sufficient, at the recycling of the upholstery element (1) for producing a foam flake fibre composite product as recycled material, to provide the binding agent necessary, and, for producing the foam flake fibre composite product, the foam core (2) of the upholstery element (1) is comminuted to foam flakes and the textile envelope (3, 5, 5.1) is shredded at least in parts into fibres, that the foam flake fibre comminuted mixture is then laid in a mould, and, for the melting of the melt fibres contained therein as the binding agent for the comminuted mixture, is heated to a temperature which is above the melting temperature of the melt fibres.

2. Method according to claim 1, **characterised in that** the textile envelope (3, 5, 5.1) of the upholstery element (1) which is to be recycled contains melt fibres, and the process of the comminution into fibres is carried out so that the length of the melt fibres is greater than the diameter median of the foam flakes produced by the comminution of the foam core (2).

3. Method according to claim 1 or 2, **characterised in that** the mould introduction of the comminuted mixture, for its introduction into a mould or for laying out, is carried out in the form of a foam flake fibre mixture layer.

4. Method according to any one of claims 1 to 3, **characterised in that** the heating of the comminuted mixture laid in the mould is carried out in a microwave tunnel oven.

5. Method according to any one of claims 1 to 4, **characterised in that**, after the curing of the molten melt fibres, the foam fibre composite semi-finished product is cut to shape.

6. Upholstery element, in particular of an upholstered furniture item, said upholstery element (1) comprising a foam core (2) and at least one textile envelope (3, 5, 5.1) as an input product for carrying out the method according to any one of claims 1 to 5, **characterised in that** the upholstery element (1) contains in its foam core (2) and/or in its envelope (3, 5, 5.1) fibres which consist at least proportionately of a low-melting plastic as melt fibres, wherein the proportion of these fibres in the upholstery element (1) in relation to the mass of the foam core portion (2) is sufficient for its quantity in turn to be sufficient, at the recycling of the upholstery element (1), which includes a comminution of the foam core (2) into foam flakes as well as the shredding into fibres of the envelope (3, 5, 5.1) or a part thereof, under the influence of heating to a temperature which lies above the melting temperature of the melt fibres, due to the melting of the melt fibres, to provide the binding agent for the adhering of the constituents of the comminuted mixture such as to produce a foam fibre composite product as a recycled material.

7. Upholstery element according to claim 6, **characterised in that** the proportion by weight of melt fibres corresponds to at least 5% of the weight of the foam core (2).

8. Upholstery element according to claim 6 or 7, **characterised in that** the upholstery element contains in its foam core and/or in its envelope fibres, wherein the proportion of these fibres in the upholstery element in relation to its foam core proportion is sufficient for the necessary quantity of additional fibres to be provided for the foam product which is to be produced from the recycled upholstery element.

9. Upholstery element according to any one of claims 6 to 8, **characterised in that** the envelope of the foam core (2) comprises an inner non-woven fleece layer as padding (5, 5.1) and an outer textile, in particular woven, sleeve (3), and that the melt fibres are contained in the non-woven fleece layer and/or in the sleeve.

10. Upholstery element according to claim 9, **characterised in that** the melt fibres contained in the non-woven fleece layer (5, 5.1) serve to adhesively bond the fibres of the non-woven fleece layer.

11. Upholstery element according to any one of claims 6 to 10, **characterised in that** the melt fibres are produced at least proportionately as bi-component fibres, with a core and a melt fibre material, wherein the core consists of a material with a higher melting temperature than the melt fibre casing.

12. Upholstery element according to claim 11, **characterised in that** the core of the bi-component fibres is a fibre of PP, PET, modified PES, and the melt casing is a low-melting polyester polymer.

13. Upholstery element according to any one of claims 6 to 12, **characterised in that** the melt fibres are present with different melt temperatures in the foam core and/or in the envelope.

14. Upholstery element according to claim 13, **characterised in that** the melt fibres can be divided into a first group of melt fibres with a higher melt temperature and into a second group of melt fibres with a lower melt temperature, wherein, in the group of melt fibres with higher melt temperature, one or more of the following fibres are contained, individually or in combination with one another: Polyglycol acid (PGA), polylactic acid (PLA), polyethylene adipate (PEA), polyhydroxylalkanoate (PHA), polyethylene terephthalate (PBT), polytrimethylene terephthalate (PET), and polyethylene naphthalate (PEN), and wherein the second group of melt fibres with lower melt temperature are polyester-based fibres with a correspondingly lower melting point.

15. Upholstery element according to any one of claims 6 to 14, **characterised in that** the upholstery element is a mattress.

## Revendications

1. Procédé de fabrication d'un produit composite à partir de flocons de mousse et de fibres, en tant que matériau recyclé, constitué d'au moins un élément de rembourrage (1) à recycler, lequel élément de rembourrage (1) présente un noyau en mousse (2) et une housse en textile (3, 5, 5.1), **caractérisé en ce que**, lors de la fabrication de l'élément de rembourrage (1) à recycler, des fibres thermofusibles, constituées au moins partiellement en une matière plastique thermofusible à basse température, sont intégrées dans le noyau en mousse (2) et/ou dans sa housse textile (3, 5, 5.1) dans une quantité telle, que cette quantité suffit, au moment du recyclage de l'élément de rembourrage (1), pour fabriquer un produit composite à partir de flocons de mousse et de fibres, en tant que matériau recyclé, pour mettre à disposition le liant nécessaire et que pour fabriquer le produit composite à partir de flocons de mousse et de fibres, le noyau de mousse (2) de l'élément de rembourrage (1) est déchiqueté en flocons de mousse et que la housse textile (3, 5, 5.1) est dissociée en fibres, au moins partiellement, de sorte que le mélange déchiqueté de flocons de mousse et de fibres est ensuite mis en forme et que pour faire fondre les fibres thermofusibles, contenues dans ces derniers, faisant office de liant dans le mélange déchiqueté, il est réchauffé à une température supérieure à la température de fusion des fibres thermofusibles.

2. Procédé selon la revendication 1, **caractérisé en ce que** la housse textile (3, 5, 5.1) de l'élément de rembourrage (1) à recycler contient des fibres thermofusibles et que le processus de dissociation des fibres est exécuté de telle sorte que la longueur des fibres thermofusibles est supérieure au diamètre médian des flocons de mousse fabriqués par déchiquetage du noyau en mousse (2).

3. Procédé selon la revendication 1 ou 2, **caractérisé en ce que** la mise en forme du mélange déchiqueté est exécuté en insérant ce dernier dans un moule ou en déposant ce dernier sous la forme d'une couche constituée d'un mélange de flocons de mousse et de fibres.

4. Procédé selon l'une des revendications 1 à 3, **caractérisé en ce que** le réchauffage du mélange déchiqueté mis en forme est réalisé dans un four continu à micro-ondes.

5. Procédé selon l'une des revendications 1 à 4, **caractérisé en ce que**, après durcissement des fibres thermofusibles fondues, le produit composite semi-fini à partir de flocons de mousse et de fibres est mis en forme par découpage.

6. Élément de rembourrage, notamment pour du mobilier rembourré, lequel élément de rembourrage (1) présente un noyau en mousse (2) et au moins une housse textile (3, 5, 5.1) en tant que produit initial pour réaliser le procédé selon l'une des revendications 1 à 5, **caractérisé en ce que** l'élément de rembourrage (1) contient dans son noyau en mousse (2) et/ou sa housse (3, 5, 5.1), des fibres, constituées au moins partiellement en tant que fibres thermofusibles en matière plastique fusible à basse température, la part de ces fibres dans l'élément de rembourrage (1) étant suffisante par rapport à la masse utilisée pour le noyau en mousse (2), pour que leur quantité suffise au moment du recyclage de l'élément de rembourrage (1), lequel inclut un déchiquetage du noyau en mousse (2) en flocons de mousse ainsi qu'une dissociation en fibres de la housse (3, 5, 5.1) ou d'une partie de cette dernière, pour mettre à disposition, sous l'influence de chaleur à une température située au-dessus de la température de fusion des fibres thermofusibles, un liant, issu de la fusion des fibres thermofusibles, indispensable pour réaliser le collage des composants du mélange déchiqueté afin de fabriquer un produit composite à partir de mousse et de fibres en tant que matériau recyclé.

7. Élément de rembourrage selon la revendication 6, **caractérisé en ce que** la part pondérale des fibres thermofusibles correspond à au moins 5 % du poids du noyau en mousse (2).

8. Élément de rembourrage selon la revendication 6 ou 7, **caractérisé en ce que** l'élément de rembourrage contient des fibres dans son noyau en mousse et/ou dans sa housse, la proportion de ces fibres dans l'élément de rembourrage étant suffisante eu égard à sa proportion de noyau en mousse, pour mettre à disposition la quantité nécessaire de fibres supplémentaires pour le produit en mousse réalisé à partir de l'élément de rembourrage recyclé.

9. Élément de rembourrage selon l'une des revendications 6 à 8, **caractérisé en ce que** la housse du noyau en mousse (2) comporte une couche interne d'intissé en tant que ouatage (5, 5.1) et un textile externe, notamment une housse (3) tissée, et **en ce que** les fibres thermofusibles sont contenues dans la couche d'intissé et/ou dans la housse.

10. Élément de rembourrage selon la revendication 9, **caractérisé en ce que** les fibres thermofusibles contenues dans la couche d'intissé (5, 5.1) servent à coller les fibres entre elles dans la couche d'intissé.

11. Élément de rembourrage selon l'une des revendications 6 à 10, **caractérisé en ce que** les fibres thermofusibles sont fabriquées au moins partiellement en tant que fibres bicomposants avec un noyau et une enveloppe en fibres thermofusibles, le noyau étant constitué d'un matériau dont la température de fusion est supérieure à celle de l'enveloppe en fibres thermofusibles.

12. Élément de rembourrage selon la revendication 11, **caractérisé en ce que** le noyau des fibres bicomposants est une fibre en PP, PET, PES modifié et l'enveloppe thermofusible un polymère polyester qui fond à basse température.

13. Élément de rembourrage selon l'une des revendications 6 à 12, **caractérisé en ce que** des fibres thermofusibles avec des températures de fusion différentes sont présentes dans le noyau en mousse et/ou dans la housse.

14. Élément de rembourrage selon la revendication 13, **caractérisé en ce que** les fibres thermofusibles peuvent être réparties dans un premier groupe de fibres thermofusibles, avec une température de fusion plus élevée, et dans un second groupe de fibres thermofusibles, avec une température de fusion plus basse, le premier groupe de fibres thermofusibles avec une température de fusion plus élevée comprenant une ou plusieurs des fibres suivantes isolées ou combinées les unes aux autres : acide polyglycolique (PGA), acide polylactique (PLA), polyéthylène adipate (PEA), polyhydroxyalcanoate (PHA), polytéréphtalate de butylène (PBT), polytéréphtalate d'éthylène (PET) ainsi que polynaphtalate d'éthylène (PEN) et le second groupe de fibres thermofusibles avec une température de fusion plus basse étant constitué de fibres à base de polyester dont le point de fusion est par conséquent plus bas.

15. Élément de rembourrage selon l'une des revendications 6 à 14, **caractérisé en ce que** l'élément de rembourrage est un matelas.
